# DEMANDE DE BREVET EUROPEEN

(11) **EP 0 591 745 A2**
(43) Date de publication de la demande: **13.04.1994**
(21) Numéro de dépôt: 93115139.3
(22) Date de dépôt: 21.09.1993
(51) Int. Cl.: B29C 33/10, B29C 33/38, B29C 33/56

(54) **Moule pour pneumatiques, et procédé de moulage de pneumatiques**

(30) Priorité: 07.10.1992 FR 9212247
(71) Demandeur: COMPAGNIE GENERALE DES ETABLISSEMENTS MICHELIN - MICHELIN & CIE, F-63040 Clermont-Ferrand Cédex (FR)
(72) Inventeur: Vandenberghe, Paul, F-63119 Chateaugay (FR)
(74) Mandataire: Bauvir, Jacques

(57) **Abrégé**

Le moule pour pneumatique comporte un revêtement de surface 5 recouvrant au moins en partie certaines des surfaces moulantes 10 et 20, dont la structure est poreuse, à porosité en partie ouverte, pour assurer l'éventation du moule.

## Description

La présente invention se rapporte aux moules pour pneumatiques, et plus précisément aux techniques d'éventation de ces moules.

On sait qu'il est nécessaire d'éliminer l'air qui reste emprisonné entre la surface moulante des moules et le caoutchouc cru du pneumatique. Pour assurer l'éventation totale du moule, on réalise couramment de petits perçages disposés un peu partout à la surface moulante, où du gaz risque de rester emprisonné, sans pouvoir s'échapper entre les éléments du moule, par exemple sans pouvoir s'échapper entre coquille et secteurs, ou entre les secteurs eux-mêmes.

Ces artifices d'éventation présentent deux types d'inconvénients. D'une part ils laissent une trace indésirable à la surface du pneumatique après vulcanisation et démoulage de celui-ci : le fluage du caoutchouc à l'intérieur des perçages provoque la création de petites aspérités, voire des protubérances tubulaires plus grandes. D'autre part, ces perçages d'éventation s'obstruent facilement, notamment parce que le caoutchouc qui y a flué peut rester prisonnier du perçage, après vulcanisation. Le nettoyage du moule est alors indispensable, et est compliqué par le fait qu'une dissolution par voie chimique des matières d'encrassement est impossible.

C'est pourquoi l'état de la technique connaît aussi une multitude de propositions plus élaborées, visant toutes à résoudre ce problème. On peut citer des évents très complexes (US 4 347 212 ou US 4 436 497), un moule réalisé par empilage de tôles pour procurer une éventation naturelle entre les tôles (US 4 691 431), ou bien encore l'utilisation de matériaux poreux pour réaliser le moule (FR 1 192 805), ou une partie de celui-ci (WO 88/01927).

Cependant, malgré les nombreuses recherches sur le sujet, le problème persiste encore car toutes les solutions proposées à ce jour, soit entravent trop fortement l'éventation pour que celle-ci reste efficace, soit ne sont pas utilisables dans la bande de roulement au moins avec certains types de sculptures comme les sculptures fortement lamélisées, soit encore sont trop coûteuses ou trop complexes à mettre en oeuvre à l'échelle industrielle (aspiration par vide partiel).

La présente invention propose de réaliser une pellicule de surface qui permet de créer l'éventation nécessaire sans créer de défauts géométriques à la surface du pneumatique.

Selon l'invention, on réalise, à la surface moulante du moule, une pellicule particulière comprenant une porosité suffisamment ouverte, dont les pores en surface du moule sont de taille inférieure à 0.05 mm, pour canaliser l'air tout le long de la surface moulante et l'acheminer vers les surfaces transversales des pièces du moule, à la périphérie des faces moulantes, ou bien à tout autre endroit où l'air trouve une possiblité de s'échapper vers l'extérieur du moule. De préférence, on se sert des jeux qui existent naturellement entre les différents éléments du moule, pour assurer l'éventation.

En effet, un moule pour pneumatique comporte plusieurs éléments (c'est-à-dire plusieurs pièces séparées) comportant chacune une face de moulage délimitée à sa périphérie par des faces transversales non moulantes. En position dite "moule fermé", l'ensemble des faces de moulage définit une cavité correspondant exactement, en forme et en dimension, au pneumatique à mouler. Il s'agit en fait du négatif du pneumatique à réaliser.

L'invention peut s'appliquer aussi bien aux moules assurant le moulage de la seule surface extérieure des pneumatiques ou aux moules à noyau rigide, moulant l'ensemble de la surface des pneumatiques, y compris celle soumise à la pression de gonflage, ou aux moules pour bandes de roulement dans l'industrie du rechapage, et on considèrera, pour déterminer la portée de l'invention, qu'il s'agit là encore d'un moule pour pneumatiques.

Au moins un de ces éléments, par exemple une coquille, ou l'ensemble des secteurs, est constitué par une forme réalisée en matériau massif non poreux, comme de l'acier, ou une fonderie d'aluminium. En pratique, cette forme est une pièce usuelle d'un moule, que l'on va revêtir en surface par une pellicule poreuse comme indiqué ci-dessus. Le cas échéant, la pellicule de surface peut n'être réalisé que sur une partie seulement de la surface moulante, par exemple seulement aux endroits où l'évacuation d'air pose problème, ou bien encore si l'on veut profiter de l'invention pour réaliser des zones d'aspect très contrastées à la surface du pneumatique.

L'invention s'étend aussi à un procédé de moulage d'un pneumatique, au moyen d'un moule dont au moins un élément comporte une pellicule poreuse en surface, sur au moins une partie de sa face moulante, dans lequel l'éventation est réalisée en faisant cheminer l'air à l'intérieur de ladite pellicule poreuse, pour canaliser l'air jusqu'à un chemin d'éventation par lequel il peut rejoindre l'extérieur du moule.

Les figures jointes, et la description suivante, permettent de bien comprendre l'invention, par l'explication détaillée de deux exemples de réalisation, bien entendu non limitatifs.
La figure 1 est une coupe radiale méridienne d'un moule à secteurs ;
La figure 2 est un agrandissement de la zone identifiée par un cercle désigné par II à la figure 1.
Les figures 3 à 6 illustrent une variante de réalisation d'un moule à secteurs.

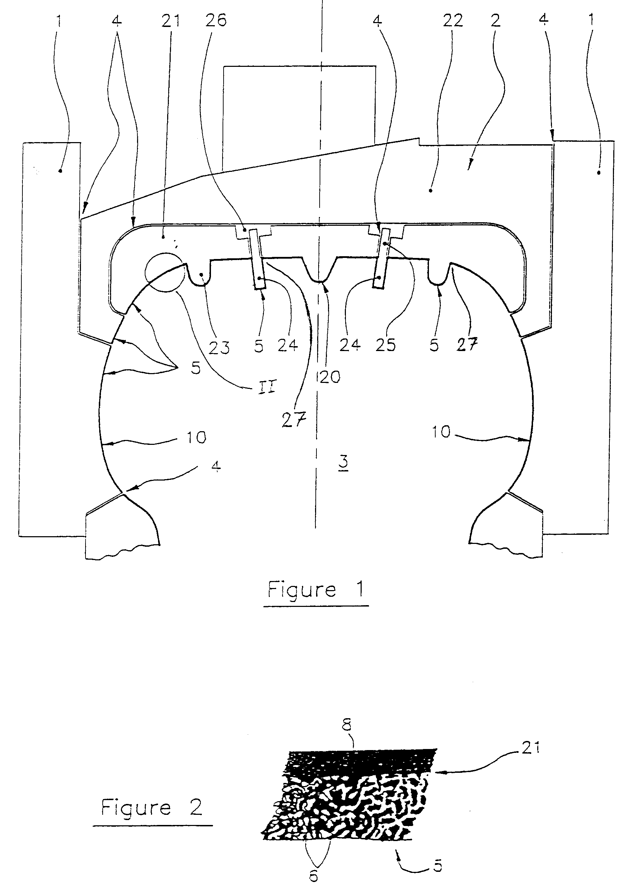

A la figure 1, on aperçoit un moule pour pneumatique, dont les éléments sont, comme bien connu, les deux coquilles 1 et les secteurs 2, constituant une couronne périphérique. Le moule est représenté en position dite "moule fermé". Il délimite une cavité toroïdale 3, dont la forme correspond exactement à la forme du pneumatique à mouler. L'éventation d'un tel moule est naturellement possible entre les éléments du moule entre lesquels, en position de fermeture, même sous la contrainte d'un effort de fermeture donné par la presse de vulcanisation, subsiste un jeu suffisant pour laisser s'échapper l'air depuis l'intérieur du moule vers l'extérieur de celui-ci. Le jeu entre secteurs 2 et coquilles 1 a été volontairement exagéré à la figure 1, pour bien montrer les fentes 4 pouvant collecter l'air tout le long de la périphérie des surfaces moulantes 10 et 20. Les secteurs 2 comportent une garniture de moulage 21 réalisée en fonderie d'aluminium, fixée sur un support 22 en fonte.

En trait gras, à la figure 1, on a schématisé la pellicule de surface 5 spécifique de l'invention. Dans cet exemple, c'est un revêtement de surface. Les éléments du moule (coquilles 1 et secteurs 2) sont des formes réalisées en matériau massif non poreux : acier usiné pour les coquilles 1, fonderie d'aluminium pour les garnitures 21 des secteurs 2. Ces formes sont réalisées exactement de la même façon que pour un moule conventionnel, duquel on peut partir pour appliquer la présente invention. Signalons simplement qu'il peut être souhaitable de tenir compte, dans le dimensionnement des éléments du moule, de l'épaisseur de la pellicule de surface, qui est de préférence comprise entre 0,1 et 0,5 mm.

Les essais du déposant ont révélé que les poudres céramiques se prêtent excellement à la réalisation de revêtements de surface drainant l'air. On peut citer les poudres céramiques d'oxydes, de nitrures, ou de carbures d'aluminium, de titane ou de silicium. En particulier, la poudre submicronique de titane commercialisée par la société CEREX (Annemasse, France) donne des résultats très intéressants. Comme autre poudre utilisable, on peut citer les poudres métalliques comme par exemple une poudre de chrome, d'aluminium, ou d'acier inoxydable.

Le procédé de réalisation des éléments revêtus est le suivant (on part de coquilles 1 et de secteurs 2 obtenus par des procédés classiques) :
1 - Les éléments à recouvrir sont préparés par sablage ou grenaillage avec un abrasif, pour favoriser l'accrochage du revêtement;
2 - La poudre de TiN est projetée au chalumeau à plasma, réglé expérimentalement pour laisser volontairement une porosité totale d'au moins 10 % de vide par rapport au volume totale et de préférence 20 %, porosité qui soit ouverte à hauteur d'au moins 30 % en volume de la pellicule poreuse, et de préférence au moins 60 % ; on obtient facilement un dépôt régulier en épaisseur, en animant la forme à revêtir de mouvements contrôlés dans les trois directions de l'espace pendant la projection ;
3 - Au besoin, on soumet la forme revêtue à un grenaillage à la bille d'acier doux, ou à la bille de verre pour limiter la rugosité de surface ; ce grenaillage étant réalisé sur un matériau fragile et non pas ductile, il constitue une opération de finition provoquant un léger enlèvement de matière en cassant les pics du revêtement, et ne conduit à aucune fermeture de pore.

On obtient ainsi un revêtement de surface 5 ayant une structure poreuse qui peut habiller complètement toutes les surfaces moulantes du moule, y compris les nervures 23 et les lamelles 24 de la garniture 21. L'air peut y trouver passage pour rejoindre des chemins d'éventations classiques, comme les jeux entre éléments, au besoin en contournant les nervures 23. Ainsi, même dans le fond 27 des évidements correspondant, sur la forme, aux bords des pains de caoutchouc que l'on voit habituellement dans les sculptures pour pneumatiques de véhicules de tourisme, l'air ne peut jamais rester définitivement piégé par le moulage. On peut donc réaliser un moule totalement dépourvu de trou d'évent débouchant à la surface du moulage, et, partant, on obtient une éventation sans trace sur le pneumatique vulcanisé.

Le grenaillage indiqué ci-dessus a pour but de conférer un aspect moins mat au caoutchouc moulé, et/ou permet de faciliter le démoulage. Il amoindrit la rugosité obtenue. Il semble souhaitable que celle-ci soit en tout état de cause telle que Rₐ est inférieur à 6 µm et Rₜ est inférieur à 40 µm, valeurs selon la norme NF E 05-015.

Le schéma de la figure 2 fait bien comprendre comment l'air trouve un chemin pour s'échapper hors du moule. Il s'agit d'un aggrandissement d'une portion identifiée par II à la figure 1. On aperçoit la pellicule 5 recouvrant l'aluminium 8 d'une garniture 21. La porosité ouverte crée des canaux continus 6. En surface du moule, la section de ceux-ci reste toujours inférieure à 50 µm, c'est à dire que la dimension la plus grande, mesurée à la surface du moule, du plus grand pore est inférieure à 50 µm ; cela assure le passage de l'air, et empêche le fluage de la gomme crue, de sorte que la porosité ne se bouche pas. L'encrassement du moule reste donc très faible.

La partie de la pellicule de surface dont la porosité est fermée participe aussi à l'élimination de l'air par un effet de capacité : une partie de l'air à évacuer peut s'accumuler dans les pores fermés et même si cette partie est faible, elle peut contribuer à la qualité du moulage obtenu.

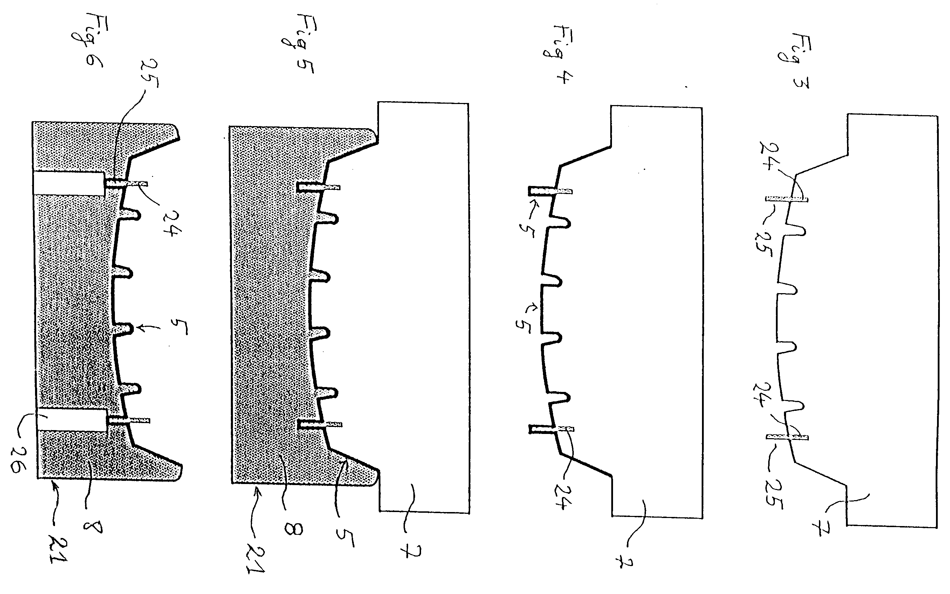

Les figures 3 à 6 illustrent une variante du procédé de réalisation des éléments revêtus, dans laquelle cette fois on modifie les procédés classiques d'obtention de secteurs en aluminium par fonderie. On part d'un outillage 7 d'injection ou de coulée, en plâtre ou en acier, qui constitue le négatif de la sculpture à obtenir. Celui-ci peut comporter des lamelles 24 dont le pied 25 fait saillie pour qu'il soit noyé ultérieurement dans l'aluminiumm liquide (figure 3). On projette au chalumeau à plasma la poudre de TiN pour obtenir un revêtement 5 à la structure poreuse de faible épaisseur, à porosité ouverte. Par exemple, on réalise une pellicule de mêmes caractéristiques que celles renseignées au point 2 ci-dessus (figure 4).

Ensuite, selon la technique utilisée, on coule ou on injecte l'aluminium 8 (figure 5) sur l'outillage 7 comportant le revêtement 5 de surface, puis on retire l'outillage 7 après solidification de l'aluminium. Les lamelles 24 restent ancrées dans la garniture 21 obtenue.

On voit que la garniture 21 obtenue comporte un revêtement de surface 5 qui ne recouvre pas les lamelles 24. En revanche, le pied 25 de celles-ci, noyé dans l'aluminium, comporte un revêtement de surface, qui ne nuit pas à leur ancrage, et peut même contribuer à évacuer l'air par l'arrière du moule si l'on creuse des dégagements 26 qui, comme expliqué dans le brevet FR 1 553 264, permettent de collecter l'air en arrière des garnitures 21, par le jeu 4 existant entre celles-ci 21 et le support 22 (voir figure 1), puis hors du moule via les fentes entre secteurs 2 et/ou via des cheminées percées à cet effet au travers des supports 22. On voit que dans cette variante, les chemins d'éventations passent au moins en partie le long du pied 25 des lamelles 24.

Cette fois, l'état de la surface moulante du revêtement 5 est principalement déterminé par celui de l'outillage 7. Contrairement à ceci, l'état de surface du revêtement du premier exemple de réalisation est celui qui résulte de la projection par le chalumeau à plasma, en dehors de tout traitement mécanique de la surface moulante, tel que par exemple celui décrit au point 3 ci-dessus, qui peut s'avérer nécessaire pour obtenir les valeurs de Rₐ et de Rₜ indiquées ci-dessus. En revanche, même sans traitement mécanique, on peut dans le second exemple de réalisation, obtenir très facilement lesdites valeurs de rugosité, ce qui s'avère très favorable au démoulage, ou obtenir tout aspect de surface souhaité, par le biais de l'état de surface de l'outillage.

## Revendications

1. Moule pour pneumatique, comportant plusieurs éléments (1, 2) ayant chacun une surface moulante (10, 20), éléments qui en position moule fermé, définissent une cavité (3) correspondant exactement au pneumatique à mouler, le moule comportant des chemins d'éventation reliant ladite cavité à un volume extérieur au moule, caractérisé en ce que l'un au moins de ces éléments est constitué par une forme en matériau massif non poreux, dont la surface moulante comporte au moins en partie une pellicule (5) de surface réalisant une structure poreuse de faible épaisseur, à porosité ouverte, dont les pores en surface du moule sont de taille inférieure à 0.05 mm, ladite structure poreuse rejoignant au moins l'un des chemins d'éventation.

2. Moule selon la revendication 1, caractérisé en ce que la porosité totale est supérieure à 10 %, et est ouverte pour au moins 30 % du volume de la structure poreuse.

3. Moule selon la revendication 1 ou 2, caractérisé en ce que la valeur Rₐ de la rugosité de la pellicule de surface est inférieure à 6 µm et la valeur Rₜ est inférieure à 40 µm.

4. Moule selon l'une des revendications 1 à 3, caratérisé en ce que la pellicule de surface est obtenue par un revêtement de surface projeté au chalumeau à plasma.

5. Moule selon la revendication 4, caractérisé en ce qu'il a subit une opération de finition par enlèvement de matière en surface du revêtement de surface.

6. Moule selon l'une des revendications 1 à 5, dont les éléments assurant le moulage de la bande de roulement comportent des lamelles (24), caractérisé en ce que les chemins d'éventations passent au moins en partie le long du pied (25) des lamelles (24).

7. Moule selon l'une des revendications 1 à 6, caractérisé en ce que les chemins d'éventation sont constitués au moins en partie, par le jeu existant, en position moule fermé, entre les éléments du moule.

8. Moule selon l'une des revendications 1 à 7, caractérisé en ce qu'il est totalement dépourvu de trou d'évent débouchant à la surface de moulage.

9. Moule selon l'une des revendications 1 à 8, caractérisé en ce que l'épaisseur de la pellicule (5) de surface est comprise entre 0,1 mm et 0,5 mm.

10. Moule selon l'une des revendications 1 à 9, caractérisé en ce que ladite forme est métallique, et en ce que la pellicule (5) de surface est réalisée au moyen d'une poudre céramique ou d'une poudre métallique.

11. Moule, selon la revendication 10, caractérisé en ce que la poudre utilisée est une poudre submicronique de TiN.

12. Procédé de moulage d'un pneumatique au moyen d'un moule dont au moins un élément comporte une structure poreuse sous forme d'une pellicule de surface sur au moins une partie de sa face moulante, dans lequel l'éventation est réalisée en faisant cheminer l'air à l'intérieur de ladite structure poreuse, pour canaliser l'air jusqu'à un chemin d'éventation par lequel il peut rejoindre l'extérieur du moule.

13. Procédé de réalisation d'un élément de moule dans lequel on coule ou on injecte de l'aluminium liquide sur un outillage (7), caractérisé en ce que, avant de couler ou d'injecter l'aluminium, on recouvre l'outillage (7) d'une pellicule poreuse de faible épaisseur, à porosité ouverte, puis on injecte ou on coule l'aluminium (8), et, après solidification de celui-ci, on retire l'outillage (7).

14. Procédé selon la revendication 12, caratérisé en ce que l'outillage (7) comporte des lamelles (24) dont le pied (25) à ancrer dans l'élément de moule fait saillie à la surface de l'outillage, et est recouvert de ladite structure poreuse pour constituer lesdits chemins d'éventation passant le long du pied (25) des lamelles (24).
